# EUROPEAN PATENT SPECIFICATION

(11) **EP 2 390 598 B1**
(45) Date of publication and mention of the grant of the patent: **22.04.2015**
(21) Application number: 10382156.7
(22) Date of filing: 31.05.2010
(51) Int. Cl.: F24J 2/52, F16B 43/02

(54) **System and method for the articulated attachment of solar reflector elements to supporting structures**
System und Verfahren zur gelenkigen Verbindung von Solar-Reflektoren auf Tragvorrichtungen
Système et procédure de raccordement articulaire de réflecteurs solaires avec dispositif de chargement

(43) Date of publication of application: 30.11.2011
(73) Proprietor: Rioglass Solar, S.A., 33612 Santa Cruz de Mieres - Asturias (ES)
(72) Inventor: Ubach Cartategui, Josep, E-33612, Santa Cruz de Mieres - Asturias (ES); Garcia-Conde Noriega, Ignacio, E-33612, Santa Cruz de Mieres - Asturias (ES)
(74) Representative: ABG Patentes, S.L.

(56) References cited:
- EP-A1- 2 096 375
- DE-U1- 8 611 120
- DE-U1- 8 902 070
- DE-U1- 20 110 111
- GB-A- 798 734
- JP-A- 11 252 829

## Description

### Technical Field of the Invention

The present invention relates to a system for the articulated attachment of solar reflector elements to supporting structures. This system assures on one hand the spatial and temporal immobility (continuity and permanence) during the lifetime of the reflector element against the forces acting on the system, and at the same time assures during the processes for fixing and anchoring the reflector elements to the supporting structure, a temporal elastic equilibrium minimizing stresses on the reflector element maintaining it in its relaxed equilibrium position and therefore conserving its optical concentration properties.

This system for the articulated attachment can be applied to the attachment of reflector elements to supporting structures within the field of electric power generation by solar radiation concentration.

### Background of the Invention

The technology in which the present invention is included, known as solar thermal concentration technology, allows, as a result of the high temperatures obtained when concentrating solar radiation, obtaining hot vapor or air which will be used for generating electricity following conventional processes.

From among the different variants for generating electricity by solar radiation concentration, the use of the fixing element object of the present invention is particularly advantageous for parabolic trough (PTC) technology.

In the context of this invention, a trough-type geometry is used to refer to that surface which is formed by parallel lines and the intersection of which at any point of the surface with a plane perpendicular thereto determines a constant curve. In the particular case in which the mentioned section defines a substantially parabolic curve, it could be said that it has a parabolic trough geometry.

PTC technology uses collectors which capture solar radiation by means of a series of reflectors having a parabolic trough section which concentrates the solar rays on a receiver tube located in the focal line of the reflectors. The working fluid flows through this tube while it is heated until finally transferring its heat to a boiler or a power accumulation system. Both the reflector and receiver tube (also called absorber tube) are assembled on a metal structure which provides rigidity to the system and allows performing the movement for tracking the sun about an axis of rotation in order to optimize the incident radiation. The assembly formed by the reflectors, absorber tube, supporting structure and tracking system is known as a solar collector.

The reflectors used in capturing radiation must have a high geometric precision of concentration in their manufacture, which is defined by the intrinsic characteristic of the reflector referred to as intercept factor. The intercept factor is defined as the ratio existing between the energy that the reflector is capable of reflecting on the absorber tube and the total energy striking the reflector, expressed in percentage terms.

A collector of a solar concentration station is a precise system, in which the structure on which the capturing system is assembled must have sufficient positioning accuracy so that when the reflectors and absorber tube are assembled, the relative position with respect to one another is as close as possible to the theoretical position, and therefore the intercept factor with which the reflector has been manufactured is maintained.

However, the arrangement and fixing of the reflectors on the supporting structure does not assure that the percentage of solar radiation reflected on the absorber tube is that defined by the intercept factor of the reflector, rather an inevitable intercept loss is assumed once the assembly process has ended. Said intercept loss will be more or less important depending on the precision of the manufacture and assembly of the metal structure, on the quality of the surface of the reflector and on the quality of the attachment between reflector and structure. This makes it necessary to use expensive processes for the manufacture and assembly of the metal structure, assuring minimal precision, and even still the intercept loss continues to be inevitable. Likewise, the attachment between the reflector and the structure becomes a critical parameter in the process for the manufacture of the reflector, requiring such high assembly precisions that they border the limits of what is technically plausible and require very expensive quality controls.

The functional component for capturing solar radiation in generating solar thermal energy is the collector. Due to the huge development experienced in this industry in recent years, there is a wide variety of designs of collectors, some examples of which can be seen in documents ES2274710A1, ES2326303A1.

In commercial plants currently being built and operated based on PTC technology, the type of collector used, although with different variants, has the same basic characteristics. The common use length of each collector ranges between 100 and 150 meters. In turn, each collector is subdivided into modules of generally 12 m in length, which form the constructive unit during the assembly. Each module consists of the following basic elements:
- The parabolic trough reflector: The solar radiation directly strikes the reflector which reflects and concentrates it in the focal line of the extruded parabola. There are several variants of reflectors with different materials, such as plastics, glasses, metals... However, until now the reflectors that have proven their validity and are being used commercially in solar fields use a glass substrate. A typical configuration of a parabolic solar reflector is a monolithic or laminar glass, with or without thermal treatment, 4 or 5 mm thick and with approximate developed dimensions of around 1700 mm by 1600 mm. Generally each module has 28 reflectors arranged assembled thereon along 7 parabolic trough sections, such that each section consists of four individual reflectors.

- Absorber tube: it receives the concentrated radiation from the reflectors that it transfers in the form of heat energy to a fluid circulating therethrough.
- Mechanical supporting structure: it serves as a support for the remaining components, assuring the relative position with respect to one another and providing rigidity to the system.
- Tracking system: mechanism which rotates the assembly about a single axis, such that the incident solar radiation on the area of aperture of the reflectors is optimized.

The metal structure must be capable of withstanding stresses in the transport and assembly as well as the operating stressing, such as wind and thermal loads, etc. In turn, it must allow the suitable and sufficiently precise attachment of all the different components assuring the optical performance of the assembly. There are multiple variants in the design of structures. Nevertheless, the most widespread design today for which the present invention is very advantageous is the socalled "central body and arms structure". This structure comprises a central body, also called torque box or tube, arranged parallel to the axis of the absorber tube, to which a set of arms is perpendicularly fixed, normally with a cantilever metal truss structure. The reflectors will subsequently be fixed on these arms in a determined number of rigid attachments, generally at least four per reflector. Examples of this type of structure are described in the aforementioned documents ES2274710A1, ES2326303A1.

Among all the components necessary for the operation of a solar thermal electric generation plant, the reflectors are one of the most critical for productivity. The characteristics which determine the quality of the reflector are reflectivity, which depends on the material and method of application of the reflective coatings, and the intercept factor, which depends exclusively on the advantages of the geometry of the reflector. The value of both parameters is directly proportional to the value of the energy produced in a solar thermal station, and therefore to the level of earnings thereof. This means that a one-point percentage increase of the intercept factor is automatically reflected in an increase in the financial earnings of the generation plant by approximately a one-point percentage (slightly less).

The main concentration technologies today, including PTC technology, are conceptually based on the geometric properties of the parabola. It can be inferred from the application of these properties that the intercept factor depends exclusively on the direction of the line tangential to the parabola at all points. Therefore, when the actual shape of the parabola presents variations with respect to its theoretical geometry, it means that the slope of the tangent line at that point has changed. In these conditions, the reflected ray no longer strikes at the theoretical focal point, but rather it presents an angular deviation with respect to it, the value of this angle being exactly twice that which is defined at this point by the theoretical tangent line and the new actual tangent line.

The extreme sensitivity of the parabolic geometry can be inferred from the preceding paragraph, where small local deformations of the order of 10 to 20 mrad and even smaller local deformations that cannot be measured using conventional measuring systems, can cause a loss of incidence of the radiation in the focal point, and therefore serious economic losses in the performance of the solar thermal station.

The determination of the optical geometry (or intercept factor) during the process for the manufacture of reflectors is only possible by means of either direct or indirect light ray reflection methods. During the measuring process, the parabolic trough substrate of the reflector must be supported at support points arranged in exactly the same relative position with respect to one another, and with respect to the surface of the substrate, which will have the theoretical support points in the supporting structure. The supports intended for serving as a support during the dimensional control of the substrate are constructively designed as simple supports in order to prevent generating stresses on the substrate which can deform it and therefore distort the result of the measurement. A simple support is understood as that connection between two structural members which allows rotation but not displacements of one member with respect to the other.

Generally four supports are used for the on-site assembly of the reflectors on their supporting structures, although in exceptional cases, like in areas which tend to have high wind loads, up to nine can be used.

The current technology for manufacturing parabolic trough reflectors allows reaching values of the intercept factor that are greater than 99.5% for absorber tube diameters of 70 mm.

An example of a process for manufacture is described in document EP2096375A1, developed by the same inventors of this application.

EP2096375 describes a reflector element provided with mounting means for fixing the reflector element to a solar heat reflector's structure. The mounting means do not require bores in the reflector and comprise supporting pads for installation on the collector structure attached to the reflector element's back surface via an adhesive material.

The manufacture of a reflector does not end with the formation of its substrate, but rather it is necessary to provide it with the means for fixing it to the mechanical structure. The solution used today to fix the reflector to the structure at each of its support points consists of a ceramic part which is attached to the surface of the reflector on the face opposite that of the incidence of solar radiation. The attachment is by means of adhering, using an adhesive which assures suitable strength and durability. Furthermore, this attachment must have a modulus of elasticity such that by maintaining the rigid attachment condition, it allows absorbing the stresses derived from the differential expansions between the material of the substrate and the ceramic part itself. Silicones have proven to be a suitable material capable of fulfilling these conditions. The ceramic part has a cavity therein in which a metal insert with a threaded female part therein is housed. The ceramic part and metal insert assembly is referred to as ceramic pad. This type of fixing is described in the document EP0098404B1.

The ceramic pad can be fixed directly to the metal structure or by means of a metal part integral with the structure which will be referred to as intermediate profile. The function of the intermediate profile is to minimize the positioning errors in the support points due to the imprecise manufacture and assembly of the structure. This intermediate profile consists of a bent metal profile with a flat face attached to the structure and the other flat face facing the ceramic pad. An opening in the form of a mounting hole which allows fixing the ceramic pad in its position is machined on this latter flat face. Three-dimensional measuring systems and tools (laser tracker) are typically used to assure the precision of this operation. The final attachment is by means of a stud which is screwed into the female part of the metal insert of the pad and the assembly is locked with the corresponding nut.

Given the sensitivity of the parabolic geometry described above, the positioning in the structure of the anchoring points of the parabola must have high precision, more so when these points, generally four in number, make up the reference support system that determines the intercept factor of the reflector.

The precision requirements increase dramatically when taking into account the mechanical nature of the reflector. The reflector is not a rigid element, but in contrast, it is an elastic element, i.e., an element the deformations of which are of a large magnitude in relation to the function it carries out. It has already been seen how minimal deformations of the order of a few milliradians can cause intercept loss on the tube.

The constructive solution for fixing the reflector to the structure must not only satisfy precision in the design and assembly, but at the same time it has to assure the spatial and temporal immobility against the forces acting on the system (wind load, its own weight, ....) during the lifetime of the product.

For this reason, the reflector is connected to the structure by means of a finite number of rigid attachments, using as an attachment element the ceramic pads described above. The anchoring of the reflector by means of ceramic pads restricts all the degrees of freedom of each support, which means that the system, understood as the reflector with four encasement-type supports, has a degree of static indeterminacy of 18, i.e., there are 18 more "limitations of movement" than those which are strictly necessary. Encasement-type support is understood as that connection between two structural members which prevents the rotation and the displacement in any direction of one member with respect to the other.

A system the movement of which is excessively restricted has the drawback of requiring for each of its supports additional precision in the geometry, because any deviation will cause deformation in that element having less rigidity. In this case, the element that can be being deformed is the reflector, the rigidity of which against bending (since it is a sheet) is less than the remaining attachment elements and the structure itself.

The factors affecting the position of the anchoring points in the collector are the following:
- Errors in the manufacture and assembly of the metal structure
- Errors on the intermediate profile
- Errors in the manufacture of the pads
- Positioning errors of the pads in the reflector
- Errors of the reflector itself, in the area of the support

The errors in the manufacture and assembly of the metal structure are dimensional uncertainty errors typical of any process for the manufacture and assembly of metal structures. Assuring the position of the anchors with the required precision is an expensive process in terms of construction times and labor, because it requires operations which normally present little precision, such as cutting, welding, drilling. The cost of the process is furthermore increased because it requires the use of positioning jigs, three-dimensional measurements by means of laser devices, etc. Even once the reflector is placed on its anchoring points, the final positioning thereof by means of side movements can cause deviations in the less rigid elements of the structure, such as the intermediate profile.

Once the main body of the module has been manufactured, which body is formed by the torque box and the support arms for the reflector, only one measurement of the position of the center of the mounting hole but not of the contact angle is taken with a laser device. If the final flatness of the intermediate profile in its area of contact with the ceramic pad is not correct, stresses occur in the rigid attachment which lead to deformations in the reflector. For example, it has been found that deviations of 20 hundredths of a mm give rise, depending on the point of deformation, to deviations in the support plane of 3 or 4 mrad.

Along with the metal structure, the correct positioning of the pads in the reflector takes on a very important role, being a critical parameter to be controlled during the fixing thereof, particularly the angular deviation of the pad in the plane perpendicular to the focal line of the parabolic trough reflector (axis of the absorber tube), given that it is the plane containing the lines tangent to the parabolic section. There are at least 4 pads for each reflector, and in turn each one can be deviated in two different directions, in a positive or negative direction. It is evident that there are many combinations causing different effects, especially when the reflector has a parabolic section. The difficulty of controlling the acceptable limits of angular deviation of the placement of the pads increased due to the fact that they are not adhered to a theoretical surface, but rather to an actual reflector substrate, which also has its own manufacturing tolerances and therefore more or less important angular deviations on the surface. In addition to the positioning and, to a lesser extent, the errors in the manufacture of ceramics derived from the lack of flatness of their facets, i.e., the substantially parallel faces of the ceramic pads, also cause deformations in the rigid attachment to the reflector.

Another variable affecting the final result is the order of fixing the pads in the structure. The first pad that is tightened will condition the position of the rest. The tightening torque between the pad and the structure also slightly affects the result. The more torque that is applied, up to a certain limit, the greater the deformation generated in the substrate, so the performance will be deteriorated. The tightening torque is therefore yet another parameter to be controlled in this process.

The geometric quality of the reflector is fundamental in the overall performance of the solar thermal plant. The statistical results of the analysis of the angular deviations in the entire surface of the reflector show that the distribution of the angular deviations of the reflected ray can approximate a normal statistical distribution. Thus, a reflector with an acceptable intercept factor but with high standard deviation values will present greater sensitivity to small deformations in the supports. In contrast, a reflector with angular deviations close to the nominal value thereof will have a greater margin for absorbing errors.

It can be asserted that a series of errors inherent to the processes themselves are present during the manufacture and subsequent on-site assembly of each of the components of a collector. Today, limiting these errors to within reasonable values involves high costs in the manufacture, quality control and assembly, despite which high costs an intercept loss inevitably takes place in the absorber tubes due to the deformations induced in the surface of the reflector.

The more serious attempts to minimize the loss of optical performance once assembled on-site have been made by approaching the problem from the viewpoint of the manufacture of the structure itself. Document ES2326303A1 describes a solution based on a process for manufacture by means of which more precise structures with greater rigidity in the elements forming them are achieved. The problem of providing additional rigidity to the structure is that the dimensional requirements of the assembly become even greater because there is no possibility for the reflector to reduce the stresses to which it will be subjected once it is rigidly fixed to the entire assembly. This solution therefore increases the cost of manufacture and does not solve the problem derived from placing the ceramic pads in the reflector without angular deviations of the theoretical position thereof.

DE8902070 discloses an articulated joint comprising two assemblies of double spherical washers and a male fixing element passing through the holes of the assemblies of double spherical washers.

DE20110111 discloses a device for the adjustable fixture of an apparatus involves a holder directly formed on the housing of the apparatus and provided with a fixture flange component. A tension screw enables different angle positions to be fixed between the apparatus holder and the surface of the flange component. On the counter side of the flange surface of the flange component there is a dome with a tapped hole in its axial direction. A disk-shaped adjustment component is provided with a diametrical slot. The width of the slot corresponds to the shaft diameter of the tension screw and the locating surface for the head of the tension screw is curved in the direction of the slot.

GB798734 discloses a washer for compensating for angles between the head or nut of a fastener shank and a surface of a member through which the shank extends, comprises a semispherical body with a flanged-edge. The body is formed with a slot extending from the crown of the body toward the edge. A tongue formed from the material removed to make the slot is positioned to abut the shank in all positions thereof. The nut or head of the shank may be part-spherically shaped for full engagement with the washer. In a modification, the tongue is replaced by a slotted flat disc secured to the edge.

JP11252829 discloses a dish-formed spherical seat bored in the surface of the fixed seat of a fulcrum leaf spring so as to set the position of an armature with precision, even if the angle of the fulcrum leaf spring is incorrect, and a spherical washer which meets the dish-formed spherical seat is disposed on the back surface of the fulcrum leaf spring. The fulcrum leaf spring is seated on the opposite side of the spherical washer so as to become flat. If an error in the angle of the fulcrum leaf spring is small, it can be corrected by disposing the spherical washer only at the lower side of the fulcrum leaf spring. If an error in the angle of the fulcrum leaf spring is large, it can be corrected over a wide range by disposing the spherical washer on both the top and bottom of the fulcrum leaf spring.

For the purpose of analyzing and better understanding the loss of performance observed in the field with respect to the initial intercept factor values of the reflectors, the attempt has been made to reproduce the behavior of the system as a whole in the laboratory such that it would allow knowing the real effect of the position of the ceramic pads. For that purpose, a tool with which a battery of measurements has been taken has been designed and built.

The tool built to simulate the supporting structure represents an actual section thereof, with the four support points of the reflector located in the same plane parallel to the horizontal. Said tool reproduces the degrees of freedom of the actual structure. All the tests described below were conducted based on the spatial position of the support points of the structure being within specifications. The values observed in said tests can be deteriorated in practice in those cases in which the actual on-site structure can be outside the established tolerance limits.

Measuring equipment called QDEC has been used to determine the intercept factor. This equipment uses a method of measurement based on deflectometry which allows calculating the deviation of the tangents in the surface of the reflector, and from that, the angular deviations on the focal point by means of a series of photographs. This equipment is currently marketed by CSP Services and has been developed in collaboration with the German Aerospace Institute (DLR). To take the measurement, the tool which simulates the actual structure is arranged in the position defined for such purpose in the QDEC equipment.

Two groups of reflectors were analyzed in a first battery of tests:
- Group A: Reflectors with an acceptable intercept factor for a receiver tube having a diameter of 70 mm and an angular deviation of the position of the pads less than 10 mrad.
- Group B: Reflectors with an acceptable intercept factor for a receiver tube having a diameter of 70 mm and a position of the pads in the plane perpendicular to the receiver tube greater than 10 mrad.

For both cases the value of the intercept factor was analyzed in the following suppositions:
- Supposition 1: Part measured in the dimensional control conditions which take place in the manufacture of the reflectors: simple support in four points of the reference tool during the measurement. The measurements resulting from supposition 1 correspond to the intercept factor value which characterizes the reflector during the normal processes for manufacture.
- Supposition 2: Reflector with adhered standard ceramic pad simply supported in the tool which simulates the metal structure of the collector. The stud inserted in the threaded female part of the ceramic pad is free, without any nut to tighten it, therefore without any restriction of the relevant degrees of rotational freedom (except the rotation about the axis of the stud which is not relevant for the purposes of the technical problems identified) in each of the supports. The result of the measurement will indicate the minimum error caused by the errors in the manufacture of the components (structure, mirror, pads), even these components being within acceptable dimensional tolerance values.
- Supposition 3: Reflector with adhered standard ceramic pad supported in the tool simulating the metal structure of the collector in an encasement-type support, i.e., with all the degrees of freedom of each support being restricted. The attachment is fixed by means of a nut screwed on the stud which is inserted in the threaded female part of the ceramic pad, using the standard tightening torque defined for such on-site operation. The result of this measurement will indicate the contribution to the loss of optical performance of the collector caused by the restriction of the degrees of freedom of the support and the consequent deformation of the reflector.

### Test 1: Reflectors group A, according to suppositions 1, 2 and 3:

| Part No. | Position pad 1 (mrad) | Position pad 2 (mrad) | Position pad 3 (mrad) | Position pad 4 (mrad) | Average | %IF tube 70, supposition 1 | %IF tube 70, supposition 2 | Difference supposition 1 and 2 | %IF tube 70, supposition 3 | Difference supposition 1 and 3 |
|---|---|---|---|---|---|---|---|---|---|---|
| 1 | -2.73 | -1.18 | 7.36 | 2.82 | 1.57 | 99.01 | 98.55 | 0.46 | 97.97 | 1.04 |
| 2 | 1.55 | 4.00 | -8.36 | 0.27 | -0.64 | 99.71 | 99.60 | 0.11 | 99.27 | 0.44 |
| 3 | 0.27 | 0.36 | -8.55 | 7.09 | -0.20 | 99.47 | 99.12 | 0.35 | 98.16 | 1.31 |
| 4 | 2.27 | -3.64 | -6.82 | 0.00 | -2.05 | 99.38 | 99.06 | 0.32 | 98.84 | 0.54 |
| 5 | -0.55 | 5.91 | 1.55 | 9.55 | 4.11 | 99.30 | 98.97 | 0.33 | 98.72 | 0.58 |
| 6 | 2.18 | -5.18 | 4.00 | 0.45 | 0.36 | 99.10 | 98.91 | 0.19 | 98.00 | 1.10 |
| 7 | 0.00 | 3.55 | 1.55 | -2.18 | 0.73 | 99.78 | 99.63 | 0.15 | 98.93 | 0.85 |
| 8 | 0.00 | -0.73 | 7.45 | -3.64 | 0.77 | 98.74 | 98.31 | 0.43 | 97.96 | 0.78 |
| 9 | 1.73 | -1.09 | 2.36 | -0.27 | 0.68 | 99.32 | 98.99 | 0.33 | 99.02 | 0.30 |
| 10 | -3.09 | 2.64 | -6.18 | 7.45 | 0.20 | 99.82 | 99.55 | 0.27 | 99.43 | 0.39 |
| 11 | -1.00 | 1.45 | 1.36 | -1.55 | 0.07 | 100.00 | 99.94 | 0.06 | 99.89 | 0.11 |
| 12 | 1.27 | -1.64 | 2.00 | -0.91 | 0.18 | 99.52 | 99.27 | 0.25 | 99.20 | 0.32 |
| AVERAGE | | | | | | | | 0.27 | | 0.65 |

### Test 2: Reflectors group B, according to suppositions 1, 2 and 3:

| Part NO. | Position pad 1 (mrad) | Position pad 2 (mrad) | Position pad 3 (mrad) | Position pad 4 (mrad) | Average | %IF tube 70, supposition 1 | %IF tube 70, supposition 2 | Difference supposition 1 and 2 | %IF tube 70, supposition 3 | Difference supposition 1 and 3 |
|---|---|---|---|---|---|---|---|---|---|---|
| 1 | 25.91 | 30.09 | 28.00 | -17.09 | 16.73 | 99.80 | 99.49 | 0.31 | 98.23 | 1.57 |
| 2 | 22.64 | 31.36 | 28.64 | -16.00 | 16.66 | 99.98 | 99.82 | 0.16 | 97.90 | 2.08 |
| 3 | 23.09 | 31.45 | 24.18 | -18.00 | 15.18 | 99.94 | 99.91 | 0.03 | 99.21 | 0.73 |
| 4 | -22.27 | -29.00 | -27.00 | 14.55 | -15.93 | 99.98 | 99.64 | 0.34 | 98.32 | 1.66 |
| 5 | -25.45 | -29.64 | -27.09 | 13.73 | -17.11 | 99.96 | 99.93 | 0.03 | 98.25 | 1.71 |
| 6 | -21.82 | -33.82 | -27.36 | 14.09 | -17.23 | 99.99 | 99.97 | 0.02 | 98.46 | 1.53 |
| 7 | -21.82 | -29.36 | -27.18 | 13.82 | -16.14 | 100.00 | 99.83 | 0.17 | 98.27 | 1.73 |
| 8 | -24.55 | -31.45 | -25.00 | 17.73 | -15.82 | 99.96 | 99.94 | 0.02 | 95.38 | 4.58 |
| 9 | -27.27 | -34.82 | -30.09 | 13.00 | -19.80 | 99.99 | 99.82 | 0.17 | 98.12 | 1.87 |
| 10 | -22.00 | -35.18 | -26.36 | 12.36 | -17.80 | 99.99 | 99.86 | 0.13 | 97.78 | 2.21 |
| AVERAGE | | | | | | | | 0.11 | | 2.00 |

In view of the results of supposition 2, for both Test 1 and for Test 2, it can be concluded that there is a minimal and inevitable influence of the errors in the manufacture, which in the conditions of performing the test is between 0.1% and 0.3% of the overall field intercept value. As has previously been indicated, these values can be deteriorated in practice. In simple support conditions, the precision of adherence of the pads, within reasonable values, is assimilated by the adjustment grooves that the structure has at the support points, so no difference is observed between the results of Test 1 and the results of Test 2.

It can be inferred from supposition 3 that when all the supports are fixed and all the degrees of freedom are restricted in each of them, the loss of intercept factor increases substantially up to very economically relevant values in electric production of the solar field. This increase is particularly dramatic when either the pads present high angular deviations, or when the structure is deviated with respect to its theoretical position, after values greater than 10 mrad (as in the case of Test 2).

It is concluded from the real-scale mechanical simulation tests that the elimination of the rotation restrictions in the supports allows deviations in the structure or in the position of the fixing elements to be mechanically absorbed by a support without these restrictions, always keeping the glass relaxed and thus assuring an optical performance similar to that characteristic of its geometry. However, the disappearance of restrictions reduces rigidity during the operation of the system, affecting the immobility against external stressing, for example against wind loads, or that due to the actual weight of the reflector during the rotational movement of the tracking system.

It is therefore an objective of the invention for, on one hand, the system for the attachment of the reflector element to the structure to provide static equilibrium which assures the spatial and temporal immobility (continuity and permanence) during the lifetime of the assembly against the forces acting on the system, and at the same time assures a temporal elastic equilibrium which is only present during the processes for the fixing and/or the attachment of the reflectors.

DE8611120, considered the closest prior art of the invention, discloses a system according to the preamble of claim 1.

### Summary of the Invention

The inventors have found a solution to the previously described drawbacks, particularly to the loss of precision of solar collectors, by means of a system for the attachment of reflector elements to supporting structures, which meets the established requirements. The system for the attachment has a design which liberates the relevant degrees of rotational freedom in each support or attachment point, only during the assembly of the reflector in the collector. During this process, the stresses on the less rigid element, i.e., the reflector element, are minimized such that such element is kept in its relaxed equilibrium position, its optical concentration properties being conserved.

Subsequently, once the reflector element is in its final relaxed position and not tensed as a consequence of the installation, the rotation in the supports is blocked, transforming the fixing in each support into rigid attachments with all the degrees of freedom restricted, such that the system can handle the external loads with the necessary strength and stability.

The new system for the articulated attachment incorporates *adaptable joint means* which allow free rotation in space during the assembly or installation step, drastically reducing the restrictions in the supports, such that the new mechanical assembly formed by the reflector element supported, for example, in four points has, during the phase of installing and adjusting the glass or reflector element, a degree of static indeterminacy of six, compared to the initial eighteen.

In the context of the present application, the support or attachment points, or simply supports, are those points where the reflector element is attached to its supporting structure.

The mentioned problems are solved in the present invention by means of a system for the articulated attachment of solar reflector elements to supporting structures according to independent claim 1.

Claim 1 is distinguished over the closest prior art by the features included in the characterizing part of the claim. The feature of the main body of attachment having a raised and curved central area with a through hole with a side aperture communicating with a window solves the technical problem of facilitating putting the assembly together, particularly introducing the male fixing element.

The invention also relates to a reflector for solar energy concentrators according to claim 5, a solar energy reflecting installation according to claim 6 and a method for the attachment of a reflector element to its supporting structure according to independent claim 7. The method of the invention solves the stated technical problem by the provision of a system according to the first inventive aspect. Furthermore, other features of the invention and particularly advantageous embodiments thereof are defined in the dependent claims.

In a first inventive aspect, the invention presents a system for the articulated attachment of solar reflector elements to supporting structures according to claim 1.

In the context of the present invention, the main bodies of attachment can also be simply identified as *pads.*

This solution not only involves reducing the losses of the intercept factor of solar collectors with the subsequent economic benefit, but furthermore, since it absorbs errors in the manufacture of the structure, of the reflector element, of the main bodies of attachment and of the positioning of the mentioned elements with respect to one another, it allows substantially reducing the manufacturing and quality control costs associated with the production thereof, since it makes it possible to apply more favorable and easier to assure manufacturing tolerances.

In the context of the present invention, *adaptable joint means* is understood as joint means which allow during the assembly the free rotation in space of the attachment between the assembly of the reflector element and the supporting structure. Such *adaptable joint means* allow, once the positioning has concluded, the rigid attachment between both reflector element and supporting structure, independently of the angle (within the mechanical limitations imposed by the mounting hole of the structure and the mechanical design of the pad of the invention) which each of the attachment elements comprised by the reflector has and of the angle of the plane on which these elements are supported in the supporting structure.

Thus, the *adaptable joint means* temporarily enable during the assembly the positioning of the reflector on each of its supports without any restriction whatsoever of the relevant degrees of rotational freedom (all with the exception of that corresponding to the axis of the actual male fixing means) and without the presence of deformations in the reflector derived from the restriction thereof, allowing, once the positioning has concluded, the rigid fixing in each of the anchoring points to the structure in that position, with all its degrees of freedom restricted but without the deformations derived from the restriction thereof.

In a first example of the system (not claimed) the *adaptable joint means* are inside the main body of attachment, in a second example of the system (not claimed) the *adaptable joint means* are outside the main body of attachment and in the claimed invention, part of the *adaptable joint means* is located inside the main body of attachment and part is located outside.

In a second inventive aspect, a reflector for solar energy concentrators is presented, comprising at least one system for the articulated attachment to its supporting structure according to the first inventive aspect.

In a third inventive aspect, a solar energy reflecting installation is presented, comprising at least one reflector according to the second inventive aspect.

In a fourth and final inventive aspect, a method for the attachment of a reflector element to its supporting structure is presented, comprising the following steps:
- Providing at least one system for the attachment according to the first inventive aspect;
- Fixing the at least one system for the attachment on the face of the reflector element opposite the face of incidence of solar radiation, in a position coinciding with the corresponding area of attachment of the supporting structure;
- Positioning the reflector element with the at least one system for the attachment on the supporting structure; and
- Fixing the assembly to obtain a rigid attachment.

Although the application of the invention is particularly advantageous for either monolithic or laminar reflective glass substrates, it also has an application for any other substrate or reflector element with the same optical concentration properties and the same sheet-type elastic behavior, whether it is metallic or polymeric.

### Brief Description of the Drawings

The following drawings are attached to the specification in order to better understand the invention, its objects and advantages, in which the following is depicted:
Figure 1 shows a perspective view of a system for the articulated attachment (not claimed).
Figure 2 shows cross-section and exploded views of the system (not claimed) of Figure 1.
Figure 3 shows cross-section and exploded views of a system for the articulated attachment (not claimed).
Figure 4 shows a perspective view of the system for the articulated attachment according to an embodiment of the invention.
Figure 5 shows cross-section and exploded views of the embodiment of Figure 4.

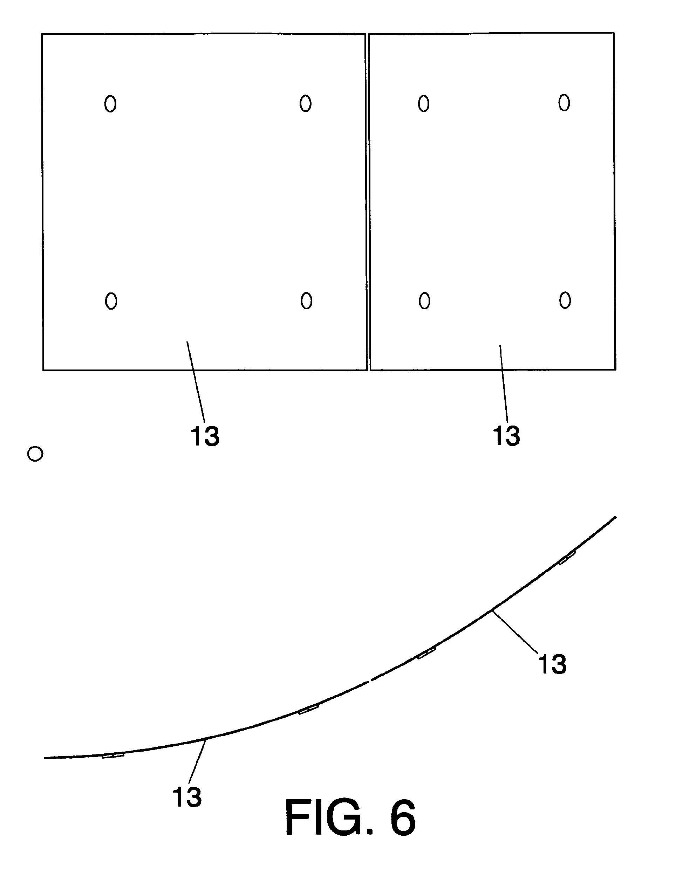

Figure 6 shows a profile view and a plan view of a half section of a collector of reflector elements with a particular arrangement of the systems for the articulated attachment according to an embodiment of the invention.

### Embodiments of the Invention

As indicated, the invention presents a system for the articulated attachment (1'') of solar reflector elements to supporting structures comprising
a main body of attachment (2''), intended for being fixed on the face of the reflector element (13) opposite the face of incidence of solar radiation, comprising a hole ( 14'') intended for receiving a male fixing element ( 3"),
at least one *adaptable joint means* which allow the free rotation in space of the attachment between the reflector element (13) and the supporting structure,
wherein the at least one *adaptable joint means* comprise a through hole (15') intended for allowing the passage therethrough of the male fixing element (3''), the fixing element (3'') having a first end for housing in the hole ( 14'') of the main body of attachment (2'') and a second end for receiving a female fixing element (5'') intended for rigidly fixing the entire reflector element (13) and supporting structure assembly.

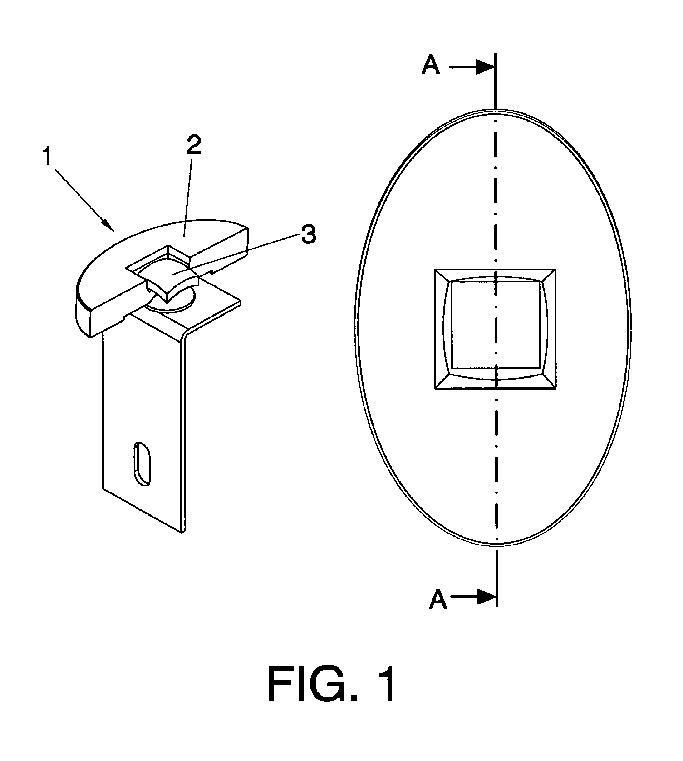

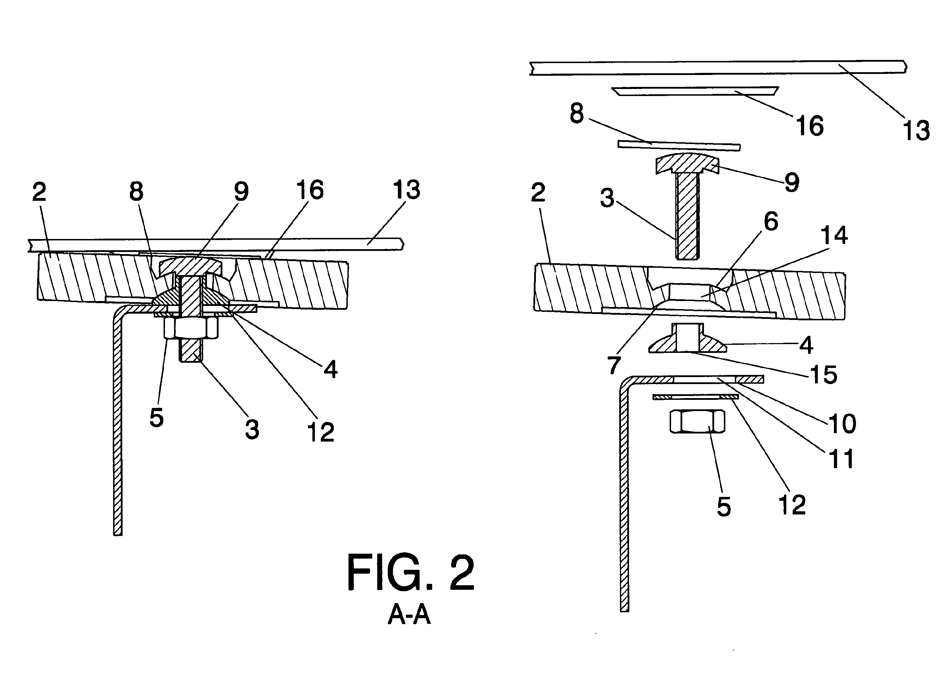

In a first example of a system for the articulated attachment (not claimed) shown in Figures 1 and 2, the main body of attachment (2) of the system for the articulated attachment (1) comprises two spherical housings (6, 7), connected through the hole (14) and with a common center of rotation in space.

The system for the attachment (1) also comprises a spherical washer (4) with a through hole (15), and the male fixing element (3), specifically a threaded rod, comprises a spherical head (9), with the particularity that the through hole (14) of the main body of attachment (2) has a diameter substantially greater than the threaded rod (3) to allow the rotation of said threaded rod (3) about any axis in space passing through the fixed point of rotation of the spherical housings (6) and (7) of the main body of attachment (2).

With this arrangement, the spherical washer (4) rests on the spherical housing (7) of the main body of attachment (2), and the spherical head (9) of the threaded rod (3) rests on the spherical housing (6) of the main body of attachment (2).

The diameter of the through hole (14) advantageously allows the rotation of the threaded rod (3) at an angle having a maximum value of 3°, preferably 2°.

The system for the attachment of this embodiment advantageously comprises a washer (12) arranged between the supporting structure (10) and the female fixing element (5). In a particular embodiment, said female fixing element is a nut.

In a particular example, the system for the articulated attachment (1) comprises a protective film (8) applied on the area of the main body of attachment (2) intended for being fixed on the face of the reflector element (13) opposite the face of incidence of solar radiation. Said film (8), for example a plastic film, prevents the adhesive for fixing the main body of attachment (2) to the reflector element from entering the hole of said main body of attachment (2).

The system for the articulated attachment (1) is fixed to the face of the reflector element (13) opposite that of the incidence of solar radiation by means of an adhesive, in a specific example, a silicone.

Therefore, the installation of the system for the attachment (1) according to this example is as follows.

The threaded rod (3) with a spherical head (9) is inserted through the through hole (14) and through the face of the main body of attachment (2) which will be in contact with the face of the reflector element (13), such that the threaded rod (3) rests on the spherical housing (6), both forming a spherical joint. Once the threaded rod (3) is placed, the protective film (8) is placed and is finally fixed to the surface of the reflector element (13) by means of a silicone or adhesive coating (16).

The spherical washer (4) is inserted on the opposite side, which washer (4) will rest on the spherical housing (7), both forming a new spherical joint.

As many main bodies of attachment (2) are fixed as there are support points in the reflector element in the structure. Once all the main bodies of attachment (2) have been fixed to the reflector element (13), the latter is positioned on the housings provided in the mounting holes (11) of the metal structure (10) by means of the threaded rod (3) . The nut (5) is then screwed on the threaded rod, such that during the screwing process, the two spherical joints that are generated between the main body of attachment (2), the threaded rod (3) and the spherical washer (4) are arranged according to that position in space which induces fewer stresses in the surface of the reflector element. The reflector element is thus in its relaxed position without induced deformations and subsequently with a rigid fixing which allows optimally performing its function in the solar field during the entire service life thereof.

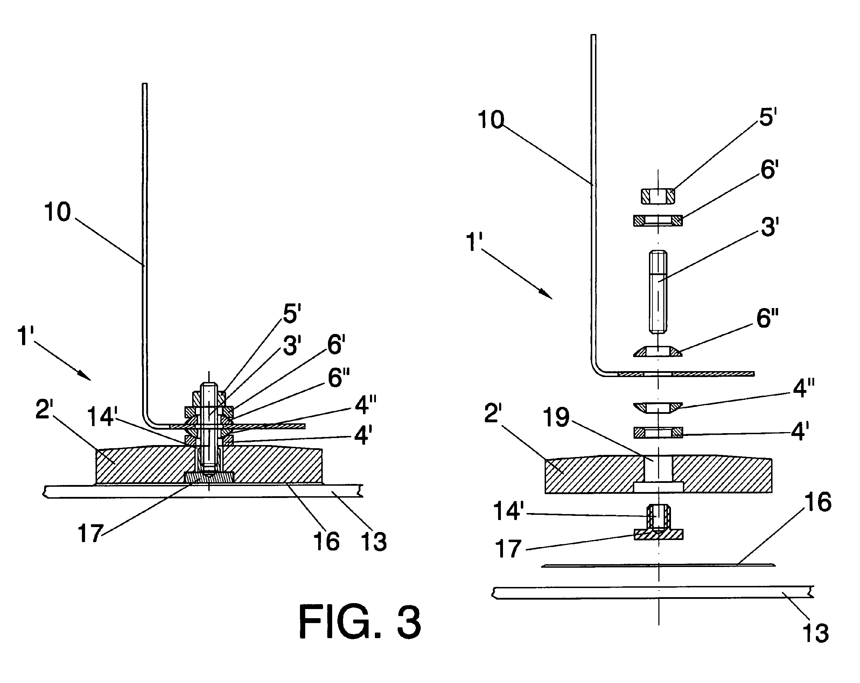

In a second example of a system for the articulated attachment (not claimed) shown in Figure 3, the main body of attachment (2') comprises a housing (19) in which a female part (17) provided with a threaded hole (14') is located.

In addition, the system for the attachment (1') comprises a first assembly of double spherical washers (4', 4") and a second assembly of double spherical washers (6', 6''), the first assembly of double spherical washers (4', 4'') being arranged between the main body of attachment (2') and the supporting structure (10), and the second assembly of double spherical washers (6', 6") being arranged in the opposite face of the supporting structure (10), i.e., in the face opposite the face in which the first assembly of double spherical washers (4', 4") is arranged.

In the position of attachment, the fixing element (3'), specifically a threaded rod (3'), passes through the holes of the first assembly of double spherical washers (4', 4''), a mounting hole of the supporting structure (10), and the second assembly of double spherical washers (6', 6''), and is fixed to the female part (17) provided with a threaded hole (14'). At its other end, the threaded rod (3') receives the threaded female part (5'), or lock nut (5'), rigidly fixing the entire reflector element (13) and supporting structure assembly.

The holes of the first assembly of double spherical washers (4', 4''), of the supporting structure (10) and of the second assembly of double spherical washers (6', 6'') have a diameter substantially greater than that of the threaded rod (3) which allows the movement of said first and second assemblies of double spherical washers.

The system for the articulated attachment (1') is fixed to the face of the reflector element (13) opposite that of the incidence of solar radiation by means of an adhesive (16), in a specific example, a silicone.

Therefore, the installation of the system for the attachment (1') according to this example is as follows.

As many main bodies of attachment (2') are fixed as there are support points in the reflector element (13) in the structure. Once all the main bodies of attachment (2') have been fixed to the reflector element (13), and before positioning the reflector element on the structure, the first assembly of double spherical washers (4', 4'') is placed on each of the corresponding supports.

The reflector element with the main bodies of attachment (2') already placed in their position, is placed on the metal structure such that the axis of the female part (17) provided with a threaded hole (14') of the main body of attachment (2') coincides as best possible with the axis of the first assembly of double spherical washers (4', 4").

Then, the threaded rod (3') traverses the mounting hole (11) of the supporting structure (10) and the hole of the first assembly of double spherical washers (4', 4") and is inserted and screwed in the female part (17) of the main body of attachment (2'). The second assembly of double spherical washers (6', 6'') is inserted at the other end of the threaded rod (3') and of the hole (11) of the supporting structure (10), and the lock nut (5') is screwed on the mentioned threaded rod (3').

Thus during the screwing process, the two assemblies of double spherical washers (4', 4'') and (6', 6") are arranged according to that position in space which induces fewer stresses in the surface of the reflector element (13). As in the previously described example, the final result is initially a reflector free of stresses, which is finally firmly anchored to the supporting structure.

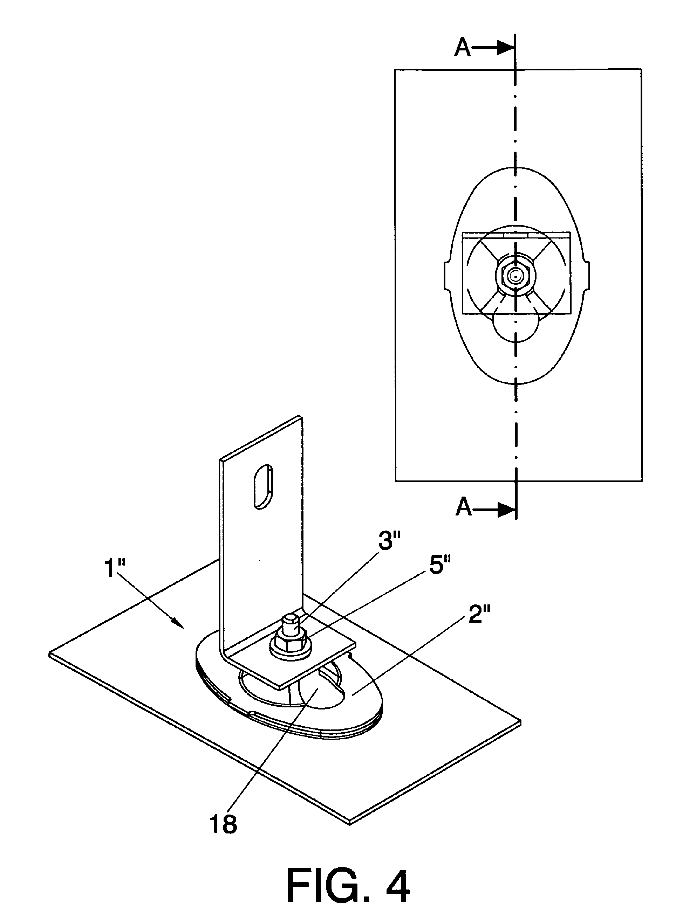

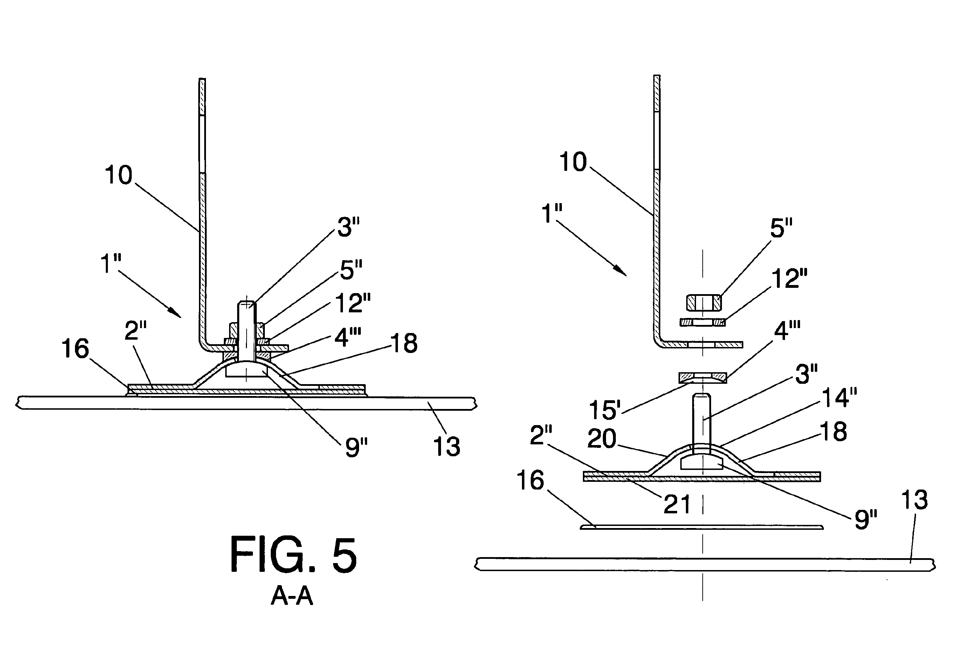

In an embodiment of the invention shown in Figures 4 and 5, the main body of attachment (2'') of the system for the articulated attachment (1") has a raised and curved central area (20) with a through hole (14") with a side aperture communicating with a window (18) which, as will be seen below, facilitates putting the assembly together, particularly introducing the male fixing element (3''').

Advantageously, the main body of attachment (2'') furthermore comprises a planar lower lamina (21) intended for being fixed to the reflector element (13) with the intervention of the corresponding adhesive coating. In a particular embodiment, the lower lamina (21) is initially independent and attached to the main body of attachment (2") by conventional means such as clips, adhesives, weld beads, screws, etc...

The system for the attachment (1") also comprises a spherical washer (4''') with a through hole (15'), and the male fixing element, specifically a threaded rod (3"), comprises a spherical head (9''), with the particularity that the through hole (15') has a diameter that is large enough to allow the assembly of the threaded rod (3").

With this arrangement, in the operating position the spherical washer (4"') rests on the surface of the curved area (20) of the main body of attachment (2''), and the spherical head (9") of the threaded rod (3") is adjusted to the inner face of the curved surface (20) of the main body of attachment (2").

The diameter of the through hole (14") advantageously allows the rotation of the threaded rod (3") at an angle having a maximum value of 3°, preferably 2°.

The system for the attachment (1") of this embodiment advantageously comprises a washer (12") arranged between the supporting structure (10) and the female fixing element (5"). In a particular embodiment said female fixing element is a nut (5").

The system for the articulated attachment (1"), specifically the lamina (21) of the main body of attachment (2''), is fixed to the face of the reflector element (13) opposite that of the incidence of solar radiation by means of an adhesive (16), in a specific example, a silicone.

Therefore, the installation of the system for the attachment (1") according to this embodiment is as follows.

As many main bodies of attachment (2") are fixed as there are support points in the reflector element (13) in the structure. Once all the main bodies of attachment (2") have been fixed to the reflector element (13), the threaded rod (3") with a spherical head (9") is inserted through the side continuation window (18) of the through hole (14") such that the spherical head (9'') is adjusted to the inner part of the surface (20), both forming a spherical joint.

Once the threaded rod (3") is placed, the spherical washer (4"') is inserted through the opposite side and will rest on the surface (20), both forming a new spherical joint, and then it is all positioned on the housings provided in the mounting holes (11) of the metal structure (10) by means of the threaded rod (3'').

The nut (5'') is then screwed on the threaded rod (3"), such that during the screwing process, the two spherical joints that are generated between the main body of attachment (2"), the threaded rod (3'') and the spherical washer (4") are arranged according to that position in space which induces fewer stresses in the surface of the reflector element. The reflector element is thus in its relaxed position without induced deformations and subsequently with a rigid fixing which allows optimally performing its function in the solar field during the entire service life thereof.

The spherical joints described in any of the previous embodiments can be implemented by means of functionally equivalent ones, such as, for example, sphere-cone contact or two wedge washers.

The following table shows the intercept results on a reflector element with main bodies of attachment (2) according to the first example (not claimed). To verify the correct operation of the system, the placement of the main bodies of attachment has a positional deviation greater than 10 mrad. The method for the positioning and measurement of the reflector element is identical to the one described in Tests 1 and 2. Supposition 1 is the same as the one described above, i.e., the part simply supported according to the measuring process during the manufacture of the reflector element. Supposition 2 corresponds to the attachment fixed by means of the main body of attachment (2) being completely tightened. Supposition 3 corresponds to the attachment resulting from eliminating the articulation in the main body of attachment (2). This test is identified as Test 3.

### Test 3:

| Part No. | %IF tube 70, supposition 1 | %IF tube 70, supposition 2 | Difference supposition 1 and 2 | %IF tube 70, supposition 3 | Difference supposition 1 and 3 |
|---|---|---|---|---|---|
| 1 | 99.80 | 99.87 | -0.07 | 84.61 | 15.19 |

The advantages of using the system for the articulated attachment of the invention according to the first example compared to a traditional pad in which there is no articulation can be deduced from Test 3. This effect is particularly dramatic when the pads of the state of the art present deviations greater than 10 mrad from their theoretical position.

Test 4 reproduces the results of the second example (not claimed) with the two assemblies of double spherical washers outside the main body of attachment (2'). The method for the positioning and measurement of the reflector is identical to the one described in Tests 1, 2 and 3. Supposition 1 is the same as in the previous section, i.e., the part simply supported according to the measuring process during the manufacture of the reflector element. Supposition 2 corresponds to the attachment resulting from using the main body of attachment (2') combined with the assemblies of spherical washers in the tightening of the threaded rod (3). Supposition 3 corresponds to the rigid attachment being completely tightened, without using spherical washers.

### Test 4:

| Part No. | Position pad 1 (mrad) | Position pad 2 (mrad) | Position pad 3 (mrad) | Position pad 4 (mrad) | Average | %IF tube 70, supposition 1 | %IF tube 70, supposition 2 | Difference supposition 1 and 2 | %IF tube 70, supposition 3 | Difference supposition 1 and 3 |
|---|---|---|---|---|---|---|---|---|---|---|
| 1 | 25.91 | 30.09 | 28.00 | -17.09 | 16.73 | 99.80 | 99.84 | -0.04 | 98.23 | 1.57 |
| 2 | 22.64 | 31.36 | 28.64 | -16.00 | 16.66 | 99.98 | 99.87 | 0.11 | 97.90 | 2.08 |
| 3 | 23.09 | 31.45 | 24.18 | -18.00 | 15.18 | 99.94 | 99.95 | -0.01 | 99.21 | 0.73 |
| 4 | -22.27 | -29.00 | -27.00 | 14.55 | -15.93 | 99.98 | 99.95 | 0.03 | 98.32 | 1.66 |
| 5 | -25.45 | -29.64 | -27.09 | 13.73 | -17.11 | 99.96 | 99.97 | -0.01 | 98.25 | 1.71 |
| 6 | -21.82 | -33.82 | -27.36 | 14.09 | -17.23 | 99.99 | 100.00 | -0.01 | 98.46 | 1.53 |
| 7 | -21.82 | -29.36 | -27.18 | 13.82 | -16.14 | 100.00 | 99.99 | 0.01 | 98.27 | 1.73 |
| 8 | -24.55 | -31.45 | -25.00 | 17.73 | -15.82 | 99.96 | 99.98 | -0.02 | 95.38 | 4.58 |
| 9 | -27.27 | -34.82 | -30.09 | 13.00 | -19.80 | 99.99 | 100.00 | -0.01 | 98.12 | 1.87 |
| 10 | -22.00 | -35.18 | -26.36 | 12.36 | -17.80 | 99.99 | 100.00 | -0.01 | 97.78 | 2.21 |
| AVERAGE | | | | | | | | 0.00 | | 2.00 |

It can be inferred from Test 4 that the loss of intercept factor of the reflector element is irrelevant when it is fixed with the system for the attachment (2') to the structure.

In view of the particular examples and tests shown, and as indicated, the concept of the system for the attachment developed in the present invention assures a freedom of rotational restrictions in the supports exclusively during the assembly, while it meets the condition of spatial and temporal immobility (continuity and permanence) against the forces acting on the system during the entire service life thereof.

The system for the articulated attachment of the invention,
▪ allows minimizing the loss of optical performance of a solar thermal concentration installation due to errors of construction and assembly of the metal structure support and to errors in the manufacture and positioning of the attachment elements between the reflector and the structure. The use of this invention ultimately results in a substantial increase of the economic earnings of a solar thermal energy production plant.
▪ allows working with more favorable constructive tolerances in both the supporting metal structure and in the processes of placing the main body of attachment or pad during the manufacture of the reflector element. This leads to a reduction of the manufacturing costs of all the components of the installation, in personnel hours, cycle times, quality control, positioning tools, ...
▪ allows using low-cost elements for its manufacture, and
▪ allows an easy to assemble and disassemble attachment in the event that this is required.

## Claims

1. A system for the articulated attachment (1") of solar reflector elements to supporting structures comprising
a male fixing element (3"), and
a main body of attachment (2'') intended for being fixed on the face of the reflector element (13) opposite the face of incidence of solar radiation, comprising a through hole (14'') intended for receiving the male fixing element (3"), the through hole (14") of the main body of attachment (2") having a diameter substantially greater than that of the male fixing element (3") which allows the rotation of said male fixing element (3") about any axis in space passing through a fixed point of rotation of the main body of attachment (2"), and
a spherical washer (4''') with a through hole (15'), intended for allowing the passage therethrough of the male fixing element (3"), the male fixing element (3") having a first end for housing in the through hole (14'') of the main body of attachment (2") and a second end for receiving a female fixing element (5") intended for rigidly fixing the entire reflector element (13) and supporting structure assembly,
**characterized in that**
the main body of attachment (2") comprises a raised and curved central area (20) in which the through hole (14'') is located and a side aperture communicating with a window (18),
the spherical washer (4"') rests on the outer surface of the raised and curved central area (20) of the main body of attachment (2''), and **in that**
the male fixing element (3") comprises a spherical head (9"), the spherical head (9") of the male fixing element (3") being adjusted, in operating situation, to the inner surface of the raised and curved central area (20) of the main body of attachment (2").

2. System for the articulated attachment (1") according to claim 1, **characterized in that** the main body of attachment (2") comprises a planar lower lamina (21) intended for being fixed to the reflector element (13).

3. System for the articulated attachment (1") according to claim 1, **characterized in that** the diameter of the through hole (14) allows the rotation of the male fixing element (3") at an angle having a maximum value of 3°, preferably 2°.

4. System for the articulated attachment (1") according to any of claims 1 to 3, **characterized in that** it comprises a washer (12") intended to be arranged between the supporting structure (10) and the female fixing element (5").

5. A reflector for solar energy concentrators comprising at least one system for the articulated attachment (1") to its supporting structure according to any of previous claims.

6. A solar energy reflecting installation comprising at least one reflector according to claim 5.

7. A method for the attachment of a reflector element (13) to its supporting structure comprising the following steps:
- providing at least one system for the attachment (1") according to any of claims 1 to 4;
- fixing the at least one system for the attachment (1") on the face of the reflector element (13) opposite the face of incidence of solar radiation, in a position coinciding with the corresponding area of attachment of the supporting structure;
- positioning the reflector element with the at least one system for the attachment (1") on the supporting structure; and
- fixing the assembly to obtain a rigid attachment.

## Patentansprüche

1. Ein System zur gelenkigen Verbindung (1") von Solarreflektorelementen an Tragstrukturen enthaltend
ein männliches Befestigungselement (3"), und
ein Hauptteil der Verbindung (2") zur Befestigung auf der Fläche des Reflektorelementes (13) gegenüber der von der Sonnenstrahlung beaufschlagten Fläche, welches eine Durchgangsbohrung (14") aufweist, zur Aufnahme des männlichen Befestigungselementes (3"), wobei die Durchgangsbohrung (14") des Hauptteils der Verbindung (2") einen Durchmesser aufweist, der im Wesentlichen größer ist als der des männlichen Befestigungselementes (3"), was die Drehung des männlichen Befestigungselementes (3") um jede mögliche Achse im Raum erlaubt, die durch einen festen Drehpunkt des Hauptteils der Verbindung (2") verläuft, und
eine Kugelscheibe (4"') mit einer Durchgangsbohrung (15') zum Durchlass des männlichen Befestigungselementes (3") durch diese Durchgangsbohrung (15'), wobei das männliche Befestigungselement (3") ein erstes Ende zur Aufnahme in der Durchgangsbohrung (14") des Hauptteils der Verbindung (2") aufweist und ein zweites Ende zur Aufnahme eines weiblichen Befestigungselementes (5"), welches dazu dient, die gesamte Baugruppe von Reflektorelement (13) und Tragstruktur starr zu befestigen,
**dadurch gekennzeichnet, dass**
das Hauptteil der Verbindung (2") einen angehobenen und gebogenen zentralen Bereich (20) aufweist, in dem die Durchgangsbohrung (14") angeordnet ist, und eine Seitenöffnung, die mit einem Fenster (18) in Verbindung steht,
die Kugelscheibe (4"') auf der Außenseite des angehobenen und gebogenen zentralen Bereichs (20) des Hauptteils der Verbindung (2") aufliegt, und dass
das männliche Befestigungselement (3") einen Kugelkopf (9") aufweist, wobei der Kugelkopf (9") des männlichen Befestigungselementes (3") im Betrieb an die Innenseite des angehobenen und gebogenen zentralen Bereichs (20) des Hauptteils der Verbindung (2") angepasst ist.

2. System zur gelenkigen Verbindung (1") gemäß Anspruch 1, **dadurch gekennzeichnet, dass** das Hauptteil der Verbindung (2") ein planares unteres Plättchen (21) aufweist, das zur Anbringung an das Reflektorelement (13) bestimmt ist.

3. System zur gelenkigen Verbindung (1") gemäß Anspruch 1, **dadurch gekennzeichnet, dass** der Durchmesser der Durchgangsbohrung (14) die Drehung des männlichen Befestigungselementes (3") in einem Winkel von höchstens 3°, vorzugsweise 2°, erlaubt.

4. System zur gelenkigen Verbindung (1") gemäß irgendeinem der Ansprüche 1 bis 3, **dadurch gekennzeichnet, dass** es eine Unterlegscheibe (12") aufweist, die dazu bestimmt ist, zwischen der Tragstruktur (10) und dem weiblichen Befestigungselement (5") angeordnet zu werden.

5. Ein Reflektor für Solarenergiekonzentratoren, der mindestens ein System zur gelenkigen Verbindung (1") an seine Tragstruktur gemäß irgendeinem der vorhergehenden Ansprüche aufweist.

6. Eine Solarenergie reflektierende Anordnung enthaltend mindestens einen Reflektor gemäß Anspruch 5.

7. Ein Verfahren zur Verbindung eines Reflektorelementes (13) an seine Trag-struktur enthaltend die folgenden Schritte:
- Bereitstellung mindestens eines Systems zur Verbindung (1") gemäß irgendeinem der Ansprüche 1 bis 4;
- Befestigen des mindestens einen Systems zur Verbindung (1") auf der Fläche des Reflektorelementes (13) gegenüber der von der Sonnenstrahlung beaufschlagten Fläche, in einer Position, die mit dem entsprechenden Bereich der Verbindung der Tragstruktur übereinstimmt;
- Positionieren des Reflektorelementes mit dem mindestens einen System zur Verbindung (1 ") auf der Tragstruktur; und
- Befestigen der Baugruppe, um eine starre Verbindung zu erhalten.

## Revendications

1. Système d'attache articulée (1") d'éléments de réflecteur solaire à des structures de support, comprenant :
un élément de fixation mâle (3"), et
un corps d'attache principal (2") destiné à être fixé sur la face de l'élément de réflecteur (13) opposée à la face d'incidence du rayonnement solaire, comprenant un trou traversant (14") destiné à recevoir l'élément de fixation mâle (3"), le trou traversant (14") du corps d'attache principal (2") ayant un diamètre sensiblement supérieur à celui de l'élément de fixation mâle (3") qui permet la rotation dudit élément de fixation mâle (3") autour d'un axe quelconque dans l'espace passant par un point de rotation fixe du corps d'attache principal (2"), et
une rondelle sphérique (4"') avec un trou traversant (15'), destinée à permettre le passage à travers celle-ci de l'élément de fixation mâle (3"), l'élément de fixation mâle (3") ayant une première extrémité pour se loger dans le trou traversant (14") du corps d'attache principal (2") et une seconde extrémité pour recevoir un élément de fixation femelle (5") destiné à fixer rigidement l'ensemble complet de l'élément de réflecteur (13) et la structure de support,
**caractérisé en ce que**
le corps d'attache principal (2") comprend une zone centrale surélevée et bombée (20) dans laquelle se situe le trou traversant (14") et une ouverture latérale communiquant avec une fenêtre (18),
la rondelle sphérique (4"') est en appui sur la surface extérieure de la zone centrale surélevée et bombée (20) du corps d'attache principal (2"), et **en ce que**
l'élément de fixation mâle (3") comprend une tête sphérique (9"), la tête sphérique (9") de l'élément de fixation mâle (3") étant réglée, en situation de fonctionnement, par rapport à la surface intérieure de la zone centrale surélevée et bombée (20) du corps d'attache principal (2").

2. Système d'attache articulée (1") selon la revendication 1, **caractérisé en ce que** le corps d'attache principal (2") comprend une lamelle inférieure plane (21) destinée à être fixée à l'élément de réflecteur (13).

3. Système d'attache articulée (1") selon la revendication 1, **caractérisé en ce que** le diamètre du trou traversant (14) permet la rotation de l'élément de fixation mâle (3") selon un angle ayant une valeur maximale de 3°, de préférence de 2°.

4. Système d'attache articulée (1") selon l'une quelconque des revendications 1 à 3, **caractérisé en ce qu'**il comprend une rondelle (12") destinée à être agencée entre la structure de support (10) et l'élément de fixation femelle (5").

5. Réflecteur pour des concentrateurs d'énergie solaire, comprenant au moins un système d'attache articulée (1") à sa structure de support selon l'une quelconque des revendications précédentes.

6. Installation de réflexion d'énergie solaire comprenant au moins un réflecteur selon la revendication 5.

7. Procédé d'attache d'un élément de réflecteur (13) à sa structure de support, comprenant les étapes suivantes:
- fournir au moins un système d'attache (1") selon l'une quelconque des revendications 1 à 4,
- fixer le au moins un système d'attache (1") sur la face de l'élément de réflecteur (13) opposée à la face d'incidence du rayonnement solaire, dans une position coïncidant avec la zone d'attache correspondante de la structure de support,
- positionner l'élément de réflecteur avec le au moins un système d'attache (1 ") sur la structure de support, et
- fixer l'ensemble pour obtenir une attache rigide.
